# EUROPEAN PATENT APPLICATION

(11) **EP 3 812 086 A1**
(43) Date of publication of application: **28.04.2021**
(21) Application number: 20202861.9
(22) Date of filing: 20.10.2020
(51) Int. Cl.: B23P 9/02, B23P 11/02, B28B 21/58, B28B 21/72, B21C 37/15, F16L 9/14, B65G 53/52, B21D 22/02, F16L 43/00, F16L 57/06, E04G 21/04, C21D 9/08, B21D 39/04, F16L 58/10, F16L 9/02, F16L 57/00

(54) **TUBULAR ELEMENT FOR THE TRANSFER OF ABRASIVE MATERIALS, IN PARTICULAR CONCRETE, AND METHOD TO PRODUCE IT**

(30) Priority: 22.10.2019 IT 201900019544
(71) Applicant: Valme S.r.l. - Unico Socio, 23010 Rogolo (IT)
(72) Inventor: Cipolla, Davide, 23885 Calco (LC) (IT); Ferrè, Fabio, 23017 Morbegno (SO) (IT)
(74) Representative: Petraz, Gilberto Luigi

(57) **Abstract**

Method to produce a tubular element (10) for the transfer of abrasive materials, in particular concrete, wherein the tubular element (10), when finished, comprises in a single piece an external tubular component (11) made of steel, having a determinate internal diameter (Di) and one or more internal tubular components (12) made of a material having a greater resistance to wear than that of the external tubular component (11) and having a determinate final external diameter (DeF) substantially equal to said internal diameter (Di) of the external tubular component (11), and wherein the external tubular component (11) and the one or more internal tubular components (12) are coaxial to a central axis (X).

## Description

### FIELD OF THE INVENTION

The present invention concerns a tubular element for the transfer of abrasive materials, in particular concrete.

The tubular element according to the present invention can also be used in any other industrial field in which pipes are required which have an internal surface with a high degree of resistance to abrasion.

The present invention also concerns the method to produce said tubular element.

### BACKGROUND OF THE INVENTION

In the construction field, but not only, the need is known to transfer viscous and highly abrasive materials from a production or storage zone to a zone where it is used or installed.

Especially in the construction field, the use of modular tubular elements is known, which are connected together to make a pipe for the transfer of very abrasive construction materials, such as for example concrete, inert materials, or suchlike, from a container, such as for example a truck mixer, to a casting zone, by means of pumping devices.

Known pipes normally consist of one or more tubular elements, or segments, straight and/or curved, connected together in sequence by means of tubular joints, or connection elements.

During use, the tubular elements are subjected to an abrasion action on their internal surfaces mainly due to the action that the material transported exerts on them.

The segments of pipe subjected to greatest wear are those in correspondence with the curved elements, described for example in document EP 3 271 271 B1 property of the present Applicant, and the initial or final segments, with respect to the direction of transfer of the concrete, of the rectilinear elements.

The existence of single-walled tubular elements and double-walled tubular elements is known.

Single-walled tubular elements are made in a single body, for example by means of casting or hot extrusion processes, with materials having sufficient mechanical resistance to withstand the required operating pressure. However, single-walled tubular elements have a low resistance to wear and therefore a short working life.

Double-walled tubular elements typically comprise an external tubular component, which defines the external layer, and an internal tubular component, coaxial to the external tubular component and defining the internal layer.

The internal tubular component has the function of resisting wear and is normally made of steel, for example C60.

The external tubular component, which in the case of a single pipe has the task of mechanically resisting the pressure of the concrete which is about 85 bar, exerts a containing action on the internal tubular component which, despite being fragile, will resist more against the impacts than can occur during normal use. It is normally made of common carbon steel, for example S355 steel.

It is known that the external and internal tubular components are coupled with a clearance of about 1-1.5 mm and the empty radial space is filled with a material suitable for gluing, such as a material based on mastic, or, as shown in document EP 1 873 440 B1, the radial space is filled with the same liquid cement infiltrated, for example through suitable holes in the internal layer, by the concrete pumped into the pipe.

One disadvantage of double-walled tubular elements is that the unsuccessful or incomplete filling of the empty space between the two tubular components can cause the internal tubular component to break, since the latter is made of a material which is very hard and resistant to wear, but also very fragile.

In fact, one very important aspect that determines the quality of the final product is the degree of coupling of the two tubular components, internal and external. The precision of the coupling, in fact, determines the maximum working pressure of the tubular element obtained, and its duration in operation.

To improve the resistance to abrasion and, therefore, the resistance to wear of the tubular elements, it is known to insert, in correspondence with one or both ends, one or more rings or elongated collars made of material that cannot be mechanically deformed but resistant to wear (for example, chromium carbide), with a length varying between 4cm and 14cm, thus protecting the initial and final part of the pipe.

However, this operation entails performing an additional step to produce the finished tubular element and, therefore, an increase in costs. Furthermore, the protection of the ends of the tubular element is limited to a maximum of 14 cm.

There is therefore a need to perfect a tubular element for the transfer of abrasive materials, in particular concrete, and the corresponding method to make it, that can overcome at least one of the disadvantages of the state of the art.

In particular, one purpose of the present invention is to provide a tubular element for the transfer of abrasive materials, in particular concrete, which is reliable and maintains its characteristics of resistance to wear for a long time, and which is also simple to make and relatively economical.

Another purpose of the present invention is to provide a tubular element for the transfer of abrasive materials, in particular concrete, which has initial and final segments that are particularly resistant to abrasion.

Another purpose of the present invention is to perfect a method to produce a tubular element for the transfer of abrasive materials, in particular concrete, or other abrasive materials, which is relatively simple, economical and quick in terms of execution time.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, a method is described to produce a tubular element for the transfer of abrasive materials, in particular concrete, wherein the tubular element, when finished, comprises in a single piece an external tubular component made of steel, having a determinate internal diameter and one or more internal tubular components made of a material having a greater resistance to wear than that of the external tubular component, and having a determinate final external diameter substantially equal to the internal diameter of the external tubular component, and wherein the external tubular component and the one or more internal tubular components are coaxial to a central axis. The method provides:
- a first step in which, in any known manner whatsoever, both the one or more internal tubular components and also the external tubular component are made separately, so that, at the end of this first step, the internal diameter of the external tubular component is greater than an initial external diameter of the internal tubular components;
- a second step in which the one or more internal tubular components are disposed in succession, coaxially and in a desired manner, inside the external tubular component along the central axis as above, defining a certain clearance with respect to the external tubular component;
- optionally, a third step in which at least one internal tubular component is mechanically deformed, that is, compressed toward the external tubular component, adhering to it and eliminating the clearance as above;
- a fourth step in which the external tubular component and the internal tubular components disposed therein are heated to an operating temperature, undergoing a radial thermal deformation such as to eliminate the clearance as above and allow a perfect radial adherence between the internal tubular components and the external tubular component;
- a fifth step in which the external tubular component and the internal tubular components, all of which have just been heated, are cooled abruptly, defining in this way the tubular element in a single piece.

In accordance with some embodiments, there is provided a tubular element made with the method described above.

This method allows to obtain a double-walled tubular element substantially in a single piece, in which the external wall has mechanical characteristics suitable to withstand high pressures and protect the internal wall, and in which the internal wall, with respect to which the abrasive material flows, has characteristics suitable to prevent or considerably reduce the abrasive effect of the material as above, thus increasing the resistance to wear of the tubular element.

Since it is made in a single piece, there is no radial space between the external tubular component and the internal tubular components, thus allowing to prevent unwanted breakages of the internal tubular element during operation, caused by the impacts of the inert materials of the concrete and not only.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic, lateral section view of a step of the method to produce a tubular element in accordance with a first embodiment;
- fig. 2 is a section view along section line II of fig. 1;
- fig. 3 is a schematic, lateral section view of another step of the method to produce the tubular element in accordance with a first embodiment;
- fig. 4 is a section view along section line IV of fig. 3;
- fig. 5 is a schematic, lateral section view of another step of the method to produce the tubular element in accordance with a first embodiment;
- fig. 6 is a schematic, longitudinal section view of a tubular element made in accordance with the method according to the present invention;
- fig. 7 is a section view along section line VII of fig. 6;
- fig. 8 is a section view along section line VIII of fig. 6;
- figs. 9-10 are schematic, lateral section views of a step of the method to produce a tubular element in accordance with a second embodiment;
- fig. 11 is a schematic, lateral section view of a step of the method to produce a tubular element in accordance with a third embodiment;
- fig. 12 is a schematic, lateral section view of a step of the method to produce a tubular element in accordance with a fourth embodiment;
- figs. 13-15 schematically show some steps of the method to produce a tubular element in accordance with some embodiments.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

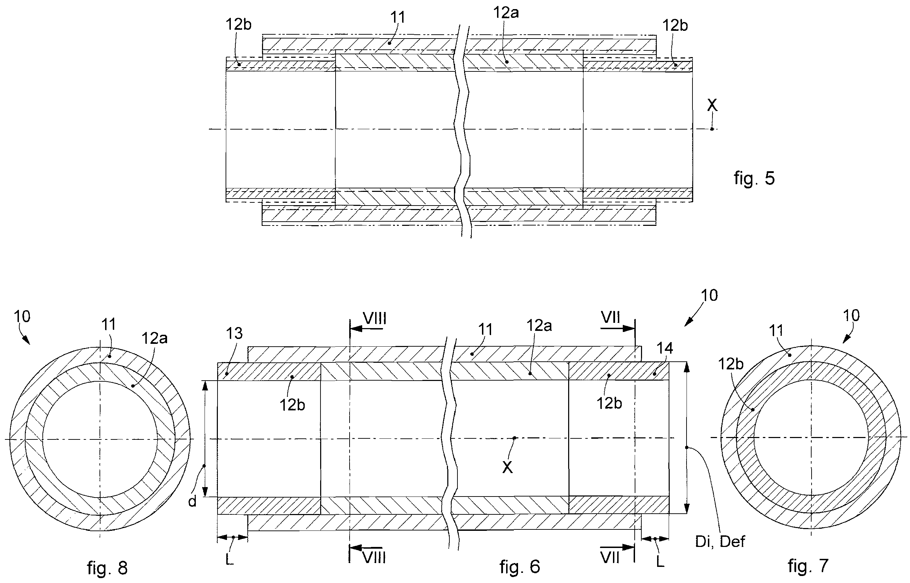

Some embodiments described using the attached drawings concern a tubular element for the transfer of abrasive material, in particular concrete, indicated as a whole with reference number 10 in fig. 6.

In particular, this tubular element 10, combined with other tubular elements 10, can be used to create a pipe for the transport of construction materials, such as inert materials or concrete, with the use of truck-mounted pumps.

The tubular element 10, at the end of the production process which will be described in more detail below, comprises, initially in a separate piece, an external tubular component 11 made of steel, having a determinate internal diameter Di, and one or more internal tubular components 12 made of materials having a resistance to wear greater than that of the external tubular component 11, and having a determinate initial external diameter Del which is slightly smaller than the internal diameter Di of the external tubular component 11, and wherein the external tubular component 11 and the one or more several internal tubular components 12 are coaxial to a central axis X.

During the production process, and before its end, there is a clearance G between the external tubular component 11 and the one or more internal tubular components 12, which in this case is equal to half the difference between the internal diameter Di of the external tubular component 11 and the initial external diameter Del of the internal tubular components 12.

The tubular element 10, at the end of the production process, comprises, in a single piece, the external tubular component 11 as above and the one or more internal tubular components 12 having a determinate final external diameter DeF substantially equal to the internal diameter Di of the external tubular component 11, wherein the one or more internal tubular components 12 are perfectly adherent radially to the external tubular component 11.

The perfect adherence between the one or more internal tubular components 12 and the external tubular component 11 is necessary to prevent the possible occurrence of cracks in the internal tubular components 12, which would make the tubular element 10 not usable for the application in question.

Furthermore, the internal diameter d of the tubular element 10, at the end of the production process, is uniform along its entire length, fig. 6. This allows to convey the flow of concrete in a very uniform manner and at the same time allows to limit to a minimum the presence of discontinuities in which the concrete would have a greater erosive action.

In accordance with some embodiments, the central axis X is rectilinear, therefore the tubular element 10 is cylindrical and has a rectilinear development.

The internal tubular components 12 can be made of the same material, or they can be made of different materials, both with respect to each other and also with respect to the material with which the external tubular component 11 is made.

The internal tubular components 12 thus defined can be positioned in succession and in a desired manner along the central axis X as above. In this way, for example, it is possible to position two internal tubular components 12 made with more resistant materials in the initial and final segment of the tubular element 10, where the erosive action of the concrete is greater, or it is possible to provide a single internal tubular component 12, substantially covering the entire length of the external tubular component 11, having the characteristics of resistance suitable for the application in question.

At the ends of each tubular element 10, or part of tubular element 10, there can be welded collars which allow to connect several tubular elements 10 together by means of joining devices, for example of the lever type, in order to define a line for conveying the concrete.

Since at the end of the production process the tubular element 10 is in a single piece, there is obtained the complete and perfect filling of the clearance G, that is, of the empty space between the one or more internal tubular components 12 and the external tubular component 11, thus being able to prevent the breaking, during operation, of the one or more internal tubular components 12, the latter being made of a very hard and wear-resistant material, but also very fragile.

In other words, thanks to the perfect radial adherence of the internal tubular components 12 with respect to the external tubular component 11, the internal tubular components 12 tend to have greater resistance to the passage of abrasive materials, and to reduce the tendency to break due to fragility, since the external tubular component 11 guarantees a homogeneous external binding.

This therefore allows to obtain a double-walled tubular element 10, in which the external wall has mechanical characteristics suitable to withstand high pressures, for example about 85 bar, and in which the internal wall, with respect to which the pumped concrete flows, has characteristics suitable to prevent or considerably reduce the abrasive effect of the flow of concrete and the effect due to the impacts suffered because of its passage.

Furthermore, since the tubular element 10 is made in a single piece, it is easy to install, for example in order to make a pipe, and allows to prevent the positioning and subsequent installations of further anti-wear devices in the initial and/or final segment of the pipe, or in the individual tubular elements 10 which constitute it.

In accordance with some embodiments, the tubular element 10 has two opposite ends 13, 14 in correspondence respectively with an inlet section and an outlet section of the tubular element 10, or vice versa, with respect to the direction of flow of abrasive material.

The ends 13, 14 as above are internally defined by internal tubular components 12 made of material highly resistant to abrasion, such internal tubular components 12 being radially adherent to the external tubular component 11.

During use, or after a certain period of operation, it is possible to direct the tubular element 10 alternately on one side and on the other with respect to the direction of the flow of abrasive material pumped into it, in order to prevent excessive erosions in the inlet section, which typically is the one most stressed especially if positioned downstream of a curved tubular element in a pipe.

In accordance with possible embodiments, the external tubular component 11 is made of metal, for example steel, advantageously not hardened, for example S355 steel.

The internal tubular component or components 12 are instead made with a wear-resistant material, having a higher hardness than that of the external tubular component 11.

According to possible solutions, the wear-resistant material has a hardness greater than or equal to 66HRC.

In accordance with possible solutions, one or more internal tubular components 12 can be made with materials containing carbides.

In accordance with other possible solutions, one or more internal tubular components 12 can be made with a steel of the C60 type.

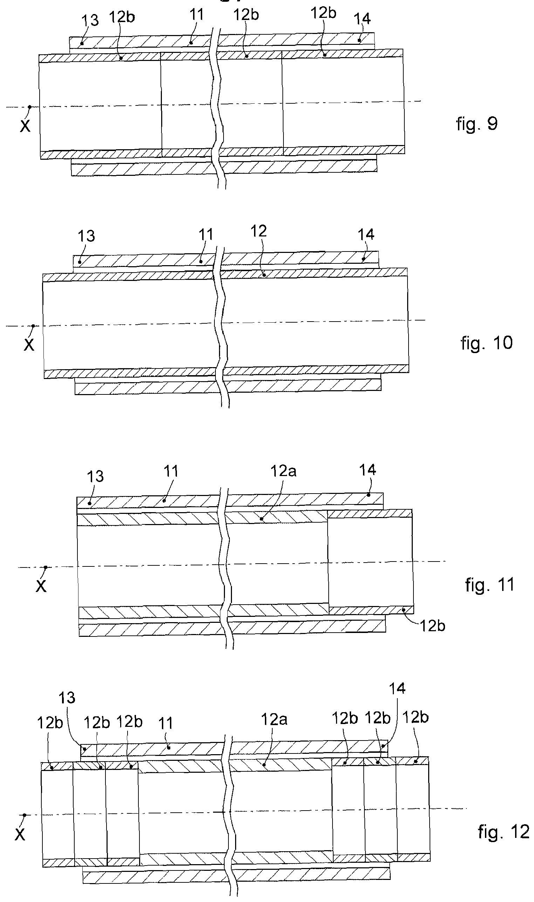

According to the embodiment shown in fig. 10, the tubular element 10 comprises an external tubular component 11 and, disposed coaxially inside it, a single internal tubular component 12 having a length substantially equal to, or slightly greater than, the external tubular component 11. In accordance with possible embodiments, in the event more than one internal tubular component 12 is provided, the internal tubular components 12 are positioned in contact with each other, aligned along the central axis X coaxially with respect to the external tubular component 11. Each internal tubular component 12 has a shorter length, in the direction of the central axis X, than the external tubular component 11.

The succession of internal tubular components 12 has an overall length approximately equal to the length of the external tubular component 11.

In accordance with some embodiments, shown in figs. 6-8, the tubular element 10 comprises an external tubular component 11 and, coaxially, a central internal tubular component 12a and two peripheral internal tubular components 12b, which cannot be mechanically deformed, positioned in correspondence with the ends 13, 14, wherein the tubular element 10 is defined in a single piece so that the central internal tubular component 12a and the peripheral internal tubular components 12b are perfectly adherent in the radial direction with the external tubular component 11.

The central internal tubular component 12a can be made of a metal material with high resistance to wear, for example C60 steel.

The peripheral tubular components 12b can be made of a not mechanically deformable metal material with high resistance to wear, such as for example a chromium carbide.

Here and hereafter, with the term "not mechanically deformable metal material" referred to the peripheral internal tubular components 12b we mean that it has a degree of deformability much lower, and therefore substantially null or negligible, with respect to the degree of deformability of the material that the central internal tubular component 12a consists of.

In accordance with possible embodiments, the peripheral internal tubular components 12b can be externally projecting from the external tubular element 11 in the direction of the central axis X by an operating height L, fig. 6. The externally projecting portion of the peripheral internal tubular components 12b can allow, during the production process, the gripping and handling of the tubular element 10 by gripping means. Furthermore, this externally projecting portion can be suitable to allow the connection between the tubular elements 10 or with other tubular elements in order to define a pipe. Optionally, the operating height L can be equal to zero, that is, the peripheral internal tubular components 12b do not protrude with respect to the external tubular component 11.

In accordance with further embodiments, the tubular element 10 comprises an external tubular component 11 and coaxially a plurality of not mechanically deformable internal tubular components 12b, wherein the tubular element 10 is defined in a single piece so that the plurality of not mechanically deformable peripheral internal tubular components 12b are perfectly adherent in the radial direction with the external tubular component 11.

In the example shown in figs. 9-10, the internal tubular components 12b are not yet integral with the external tubular component 11, to which they will be permanently joined with the method described below.

The internal tubular components 12 can have respective coupling ends with respect to which they are positioned in succession and in contact with each other along the central axis X.

In accordance with other embodiments, the tubular element 10 comprises an external tubular component 11 and coaxially a central internal tubular component 12a and a not mechanically deformable peripheral internal tubular component 12b positioned at the ends 13, 14, wherein the tubular element 10 is defined in a single piece so that the central internal tubular component 12a and the peripheral internal tubular component 12b are perfectly adherent in the radial direction with the external tubular component 11.

In the example shown in fig. 11, the central internal tubular component 12a and the peripheral internal tubular component 12b are not yet integral with the external tubular component 11, to which they will be permanently joined with the method described below.

In accordance with other embodiments, the tubular element 10 comprises an external tubular component 11 and coaxially a central internal tubular component 12a and a plurality of not mechanically deformable peripheral internal tubular components 12b positioned in correspondence with the ends 13, 14, wherein the tubular element 10 is defined in a single piece so that the central internal tubular component 12a and the peripheral internal tubular components 12b are perfectly adherent in the radial direction with the external tubular component 11. The internal tubular components 12b have a very short length in the axial direction, thus having an almost annular shape.

In the example shown in fig. 12, the central internal tubular component 12a and the peripheral internal tubular components 12b are not yet integral with the external tubular component 11, to which they will be permanently joined with the method described below.

The not mechanically deformable peripheral internal tubular components 12b can have respective coupling ends, with respect to which they are positioned in succession and in contact with each other along the central axis X.

In accordance with possible embodiments, the tubular elements 10 can have a variable length. For example, in the case of very long tubular elements 10, these, thus obtained, can be subsequently cut to size.

In order to ensure that each half, or part, of a tubular element 10 cut to size has respective ends 13, 14 provided with internal tubular components 12 made of material containing carbides, it is possible to provide the insertion of another central internal tubular component 12a made of a material containing carbides, as well as respective peripheral internal tubular components 12b in correspondence with respective ends 13, 14. In this way, when the tubular element 10 is cut into two portions, each portion will have respective ends 13, 14 provided with internal tubular components 12 made of material containing carbides.

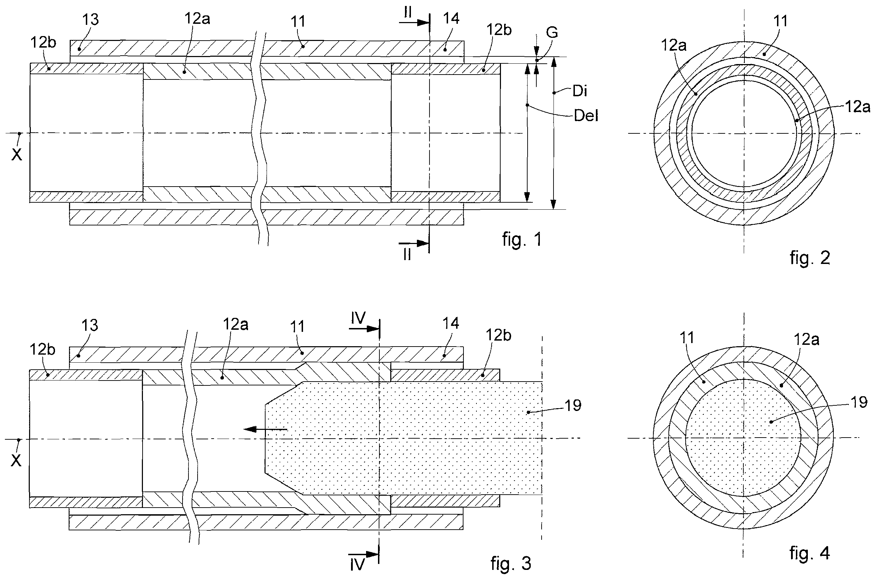

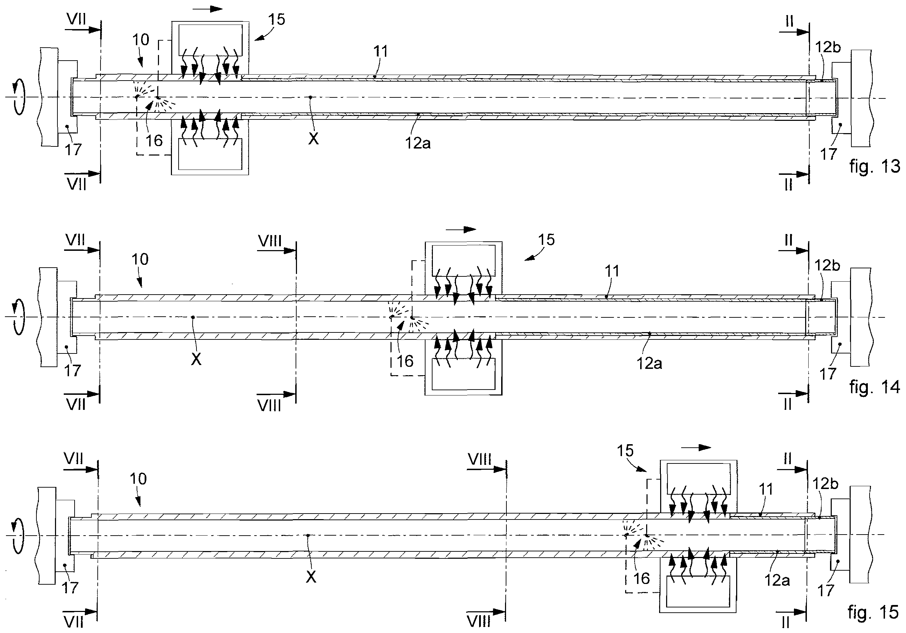

In accordance with some embodiments, a method is provided to produce a tubular element 10 for the transfer of abrasive materials, in particular concrete. The method provides:
- a first step in which, in any known manner whatsoever, both the internal tubular components 12 and also the external tubular component 11 are made separately, so that, at the end of this step, the internal diameter Di of the external tubular component 11 is greater than the initial external diameter Del of the internal tubular components 12;
- a second step in which the one or more internal tubular components 12 are disposed in succession, coaxially and in a desired manner, inside the external tubular component 11 along the central axis X, defining with respect to the external tubular component 11 the clearance G equal to half the difference between the internal diameter Di of the external tubular component 11 and the initial external diameter Del of the internal tubular components 12, figs. 1-2;
- optionally, a third step in which at least one internal tubular component 12 is mechanically deformed or compressed toward the external tubular component 11 adhering to it and eliminating the clearance G, fig. 3-4;
- a fourth step in which the external tubular component 11 and the internal tubular components 12, disposed inside it, are heated to an operating temperature T undergoing a radial thermal deformation such as to eliminate the clearance G and allow perfect radial adherence between the internal tubular components 12 and the external tubular component 11, fig. 5 and figs. 13-15;
- a fifth step in which the just heated external tubular component 11 and internal tubular components 12 are cooled, defining in this way the tubular element 10 in a single piece, figs. 13-15.

In accordance with some embodiments, shown in fig. 3, during the third step, a punch 19 having a smaller or substantially equal diameter at least with respect to the internal diameter of the peripheral internal tubular components 12b is inserted coaxially along the central axis X, in order to compress toward the external tubular component 11 at least one other internal tubular component 12, for example the central internal tubular component 12a, having an internal diameter smaller than the diameter of the punch 19. Optionally, it is possible to provide two punches 19, each inserted with respect to one of the ends 13, 14. At the end of the third step, the internal diameter of the internal tubular components 12 is substantially equal to the external diameter of the punch 19.

In accordance with possible embodiments, the clearance G is comprised between about 0.5mm and about 1.5mm, preferably between about 0.25mm and about 0.75mm.

In fact, it is necessary for the external tubular component 11 and the internal tubular components 12 to have minimal geometric differences as regards the internal diameter Di of the external tubular component 11 and the external diameter De of the internal tubular components 12, so that there is not the need to use excessively high temperatures during heating.

In accordance with some embodiments, the operating temperature T is comprised between about 800°C and about 900°. In particular, the operating temperature T depends on the type of metal materials that constitute the external tubular component 11 and the internal tubular components 12. In fact, the external tubular component 11 and the internal tubular components 12 have different thermal expansion coefficients.

The external tubular component 11 is heated so that, expanding, it also deforms toward the inside, until it contacts the external surface of the internal tubular components 12 which in turn also expand toward the outside, so that the internal diameter Di of the external tubular component 11 becomes the same as the final external diameter DeF of the internal tubular component 12, figs. 5-6.

In particular, after this method, the external tubular component 11, heated, initially expands. Following the subsequent cooling it retracts and tends to return to the initial radial dimension. The central internal tubular component 12a, which following the expanding process was adhering to the external tubular component 11, behaves like the external tubular component 11, that is, due to the heating it initially expands and due to the subsequent cooling it retracts, returning to the radial dimension reached after the expanding process. The internal tubular component 12a, due to the thermal shock suffered, will thus be hardened.

The peripheral internal tubular components 12b tend to expand radially due to the heating. Following the subsequent abrupt cooling, which occurs from the inside and therefore acts directly on the tubular components 12, the peripheral tubular components 12b made of a material containing carbide, for example chromium carbide, are unable to retract and maintain the radial dimension reached during heating. In accordance with some embodiments, shown in figs. 13-15, during the fourth step and the fifth step a clamping member 17 longitudinally clamps, that is, in the direction of the central axis X, the external tubular component 11 and the internal tubular components 12 allowing at the same time their integral rotation around the central axis X.

In accordance with some embodiments, shown in figs. 13-15, in the fourth step as above, a heating device 15 performs a heating action on the external tubular component 11 and on the internal tubular components 12 in a longitudinally localized manner, radially from the outside toward the inside, advancing in a continuous manner at a controlled heating speed in the direction of the central axis X.

With the controlled action of the heating parameters, for example the heating speed, it is possible to control the heating action of the material in a precise manner, guaranteeing a substantially homogeneous thermal deformation of the materials.

During the heating action, the external tubular component 11 and the internal tubular components 12 undergo a thermal deformation substantially in the radial direction, due to the thermal gradient and the expansion coefficient of the respective constituent materials.

In accordance with some embodiments, shown in figs. 13-15, in the fifth step as above a cooling device 16 performs a cooling action in a longitudinally localized manner, radially from the inside toward the outside, on the internal tubular components 12 and on the external tubular component 11, advancing in a continuous manner at a cooling speed in the direction of the central axis X. The cooling action is very abrupt, so that the material undergoes a thermal shock.

In particular, the heating action is temporally staggered with respect to the cooling action, and the heating speed and the cooling speed are substantially the same.

The combination of the fourth step and the fifth step can define a hardening treatment at least on the internal surface of the tubular element 10. Following the heating and sudden cooling, in fact, the external surface of the tubular element 10 has a structure highly resistant to radial pressure, the internal wall can have, or not have, a typical structure due to the heat treatment, depending on the material that the internal tubular components 12 are made of.

The internal tubular components 12, made of materials containing carbides, are not elastic and are particularly hard and fragile, therefore the perfect adherence guaranteed by the method as above ensures that, during use, no cracks form in the tubular element 10.

In accordance with possible embodiments, shown in figs. 13-15, the cooling device 16 is integrally connected to the heating device 15 in a rearward position along the central axis X. This allows to obtain substantially the same operating speeds respectively for cooling and heating, and to temporally stagger the heating and cooling action.

The tubular element 10, made according to the method described above, allows to obtain directly at the end of the process the segments in correspondence with the ends 13, 14 made of a material that cannot be mechanically deformed but is resistant to wear, of the desired length and, in any case, greater than the length obtainable with the state of the art. For example, the length of the peripheral internal tubular components 12b can vary from 50cm to 1m.

Furthermore, the presence of the peripheral internal tubular components 12b allows to weld, directly on them, the collars for joining the various tubular elements 10 of a pipe (for example, by means of joining devices of the lever type), allowing to avoid the step relating to the tempering treatment (provided after the welding of the collars) in order to eliminate the residual stresses on the tubular element 10 and, therefore, eliminate the risks of unpredictable distortions and/or deformations of the tubular element 10 following the heat treatment.

It is clear that modifications and/or additions of parts or steps may be made to the tubular element for the transfer of abrasive materials, in particular concrete, and to the method to produce it as described heretofore, without departing from the field and scope of the present invention as defined by the claims.

It is also clear that, although the present invention has been described with reference to some specific examples, a person of skill in the art shall certainly be able to achieve many other equivalent forms of tubular element for the transfer of abrasive materials, in particular concrete, and of the method to produce, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Method to produce a tubular element (10) for the transfer of abrasive materials, in particular concrete, wherein said tubular element (10), when finished, comprises in a single piece an external tubular component (11) made of steel, having a determinate internal diameter (Di) and one or more internal tubular components (12) made of a material having a greater resistance to wear than that of the external tubular component (11) and having a determinate final external diameter (DeF) substantially equal to said internal diameter (Di) of said external tubular component (11), and wherein said external tubular component (11) and said one or more internal tubular components (12) are coaxial to a central axis (X), said method being **characterized in that** it provides:
- a first step in which said one or more internal tubular components (12) and said external tubular component (11) are made separately, so that, at the end of said first step, the internal diameter (Di) of said external tubular component (11) is greater than an initial external diameter (Del) of said one or more internal tubular components (12),
- a second step in which said one or more internal tubular components (12) are disposed in succession, coaxially and in a desired manner, inside said external tubular component (11) along said central axis (X) defining with respect to said external tubular component (11) a clearance (G) equal to half the difference between said internal diameter (Di) of said external tubular component (11) and said initial external diameter (Del) of said one or more internal tubular components (12),
- optionally, a third step in which one or more of said internal tubular components (12) is mechanically deformed, being compressed from the inside toward the outside against an internal wall of said external tubular component (11) adhering thereto and eliminating said clearance (G),
- a fourth step in which said external tubular component (11) and said one or more internal tubular components (12) disposed therein, are heated to an operating temperature (T) undergoing a radial thermal deformation such as to eliminate said clearance (G) and allow a perfect radial adherence between said internal tubular components (12) and said external tubular component (11),
- a fifth step in which said heated external tubular component (11) and said heated internal tubular components (12) are cooled abruptly, defining in this way said tubular element (10) in a single piece.

2. Method as in claim 1, **characterized in that** said clearance (G) is comprised between about 0.5mm and about 1.5mm, preferably between about 0.25mm and about 0.75mm.

3. Method as in any claim hereinbefore, **characterized in that** said operating temperature (T) is comprised between about 800°C and about 900°C.

4. Method as in any claim hereinbefore, **characterized in that** in said fourth step, a heating device (15) performs a heating action, longitudinally localized and in a radial direction from the outside toward the inside, that is, toward said central axis (X), on said external tubular component (11) and said internal tubular components (12) advancing in a continuous manner at an operating heating speed in the direction of said central axis (X).

5. Method as in any claim hereinbefore, **characterized in that** in said fifth step, a cooling device (16) performs a cooling action, longitudinally localized and in a radial direction from the inside, that is, from said central axis (X) toward the outside, on said internal tubular components (12) and said external tubular component (11) advancing in a continuous manner at an operating cooling speed in the direction of said central axis (X).

6. Method as in claims 4 and 5, **characterized in that** said cooling action is temporally staggered with respect to said heating action, and said operating heating speed and said operating cooling speed are substantially the same.

7. Method as in any claim hereinbefore, **characterized in that** during said fourth step and said fifth step a mandrel (17) longitudinally, that is, in the direction of said central axis (X), clamps said external tubular component (11) and said internal tubular components (12), simultaneously allowing an integral rotation thereof around said central axis (X).

8. Tubular element (10) for the transfer of abrasive materials, in particular concrete, wherein said tubular element (10), when finished, comprises in a single piece an external tubular component (11) made of steel, having a determinate internal diameter (Di) and one or more internal tubular components (12) made with a material having a resistance to wear greater than that of the external tubular component (11) and having a determinate external diameter (De) substantially equal to said internal diameter (Di) of said external tubular component (11), and wherein said external tubular component (11) and said one or more internal tubular components (12) are coaxial to a central axis (X), **characterized in that** it is made by means of a method as in any claim from 1 to 7.

9. Tubular element as in claim 8, **characterized in that** said one or more internal tubular components (12) have respective coupling ends with respect to which they are positioned in succession and in contact with each other along said central axis (X).
